# EUROPEAN PATENT APPLICATION

(11) **EP 3 163 704 A1**
(43) Date of publication of application: **03.05.2017**
(21) Application number: 15811141.9
(22) Date of filing: 12.06.2015
(51) Int. Cl.: H02J 1/00

(54) **POWER TRANSMISSION APPARATUS AND CONTACTLESS POWER TRANSMISSION DEVICE**

(30) Priority: 26.06.2014 JP 2014131136
(71) Applicant: Kabushiki Kaisha Toyota Jidoshokki, Kariya-shi, Aichi 448-8671 (JP)
(72) Inventor: WAKISAKA, Shinya, Kariya-shi Aichi 448-8671 (JP)
(74) Representative: TBK
(86) International application number: PCT/JP2015/067064
(87) International publication number: WO 2015/198895

(57) **Abstract**

A power supply device includes an AC/DC converter and a DC/AC converter. The AC/DC converter is capable of converting grid-connected power into DC power having a second DC power value. The DC/AC converter converts DC power into AC power and outputs the converted AC power to a primary coil of a power supply-unit. Furthermore, the power supply device includes a DC/DC converter and a switching relay. The DC/DC converter is capable of converting DC power output from the AC/DC converter into DC power having a first DC power value that is smaller than the second DC power value. The switching relay switches the source of power for the DC/AC converter to the AC/DC converter or the DC/DC converter.

## Description

### TECHNICAL FIELD

The present invention relates to a power supply device and a wireless power transfer apparatus.

### BACKGROUND ART

Wireless power transfer apparatus that do not use power cords or transmission cables have been known. For example, the apparatus disclosed in Patent Document 1 includes an AC power source, which outputs AC power of a predetermined frequency, a power supply device, which has a primary coil that receives AC power, and a power receiving device, which has a secondary coil capable of wirelessly receiving AC power from the primary coil. The power receiving device and an electricity storage device are mounted on a vehicle. This apparatus wirelessly transfers AC power from the power supply device to the power receiving device through magnetic field resonance between the primary coil and the secondary coil. In this apparatus, the electricity storage device of the vehicle is charged with the AC power transferred to the power receiving device.

In some cases, AC power is output from the AC power source prior to the full-fledged charging to determine whether power can be properly transferred from the power supply device to the power receiving device. In this case, to limit the load on the AC power source and the power loss, the power value of the AC power is preferably small. On the other hand, the power value of the AC power is preferably great to shorten the charging time when the electricity storage device is charged.

If the AC power source has a converting portion, which outputs DC power when receiving external power, and a DC/AC converting portion, which converts DC power into AC power, the power value of the DC power output from the converting portion may be controlled to change the power value of the AC power to satisfy the conflicting demands. However, the control performed by the converting portion has limitations, and the above demands may be insufficiently dealt with.

### PRIOR ART DOCUMENT

### Patent Document

Patent Document 1: Japanese Laid-Open Patent Publication No. 2009-106136

### SUMMARY OF THE INVENTION

### Problems that the Invention is to Solve

Accordingly, it is an objective of the present invention to provide a power supply device and a wireless power transfer apparatus that are capable of effectively transferring AC power of different power values.

### Means for Solving the Problems

To achieve the foregoing objective and in accordance with a first aspect of the present invention, a power supply device that includes an AC power source and a primary coil is provided. The AC power source includes a first converting portion, which receives power from outside and outputs DC power, and a DC/AC converting portion. When receiving DC power, the DC/AC converting portion converts the DC power into AC power of a predetermined frequency and outputs the AC power. The primary coil receives the AC power. The power supply device is capable of wirelessly transferring the AC power to a secondary coil of a power receiving device. The power supply device further includes a second converting portion and a switching portion. The second converting portion receives the DC power output from the first converting portion and is capable of converting the DC power into first DC power of a power value that is smaller than a power value of the DC power. The switching portion switches a source of power for the DC/AC converting portion between the first converting portion and the second converting portion. The power value of the first DC power is smaller than a power value of a second DC power, which is output from the first converting portion when the source of power for the DC/AC converting portion is the first converting portion. When receiving the second DC power from the first converting portion, the DC/AC converting portion outputs second AC power as the AC power. When receiving the first DC power from the second converting portion, the DC/AC converting portion outputs, as the AC power, first AC power of a power value that is smaller than that of the second AC power.

To achieve the foregoing objective and in accordance with a second aspect of the present invention, a wireless power transfer apparatus is provided that includes an AC power source, a primary coil, a secondary coil, a second converting portion, and a switching portion. The AC power source includes a first converting portion and a DC/AC converting portion. The first converting portion receives power from outside and outputs DC power. When receiving DC power, the DC/AC converting portion converts the DC power into AC power of a predetermined frequency and outputs the AC power. The primary coil receives the AC power. The secondary coil is capable of wirelessly receiving the AC power received by the primary coil. The second converting portion receives the DC power output from the first converting portion and is capable of converting the DC power into first DC power of a power value that is smaller than a power value of the DC power. The switching portion switches a source of power for the DC/AC converting portion between the first converting portion and the second converting portion. The power value of the first DC power is smaller than a power value of a second DC power, which is output from the first converting portion when the source of power for the DC/AC converting portion is the first converting portion. When receiving the second DC power from the first converting portion, the DC/AC converting portion outputs second AC power as the AC power. When receiving the first DC power from the second converting portion, the DC/AC converting portion outputs, as the AC power, first AC power of a power value that is smaller than that of the second AC power.

### BRIEF DESCRIPTION OF THE DRAWINGS

Fig. 1 is a block diagram illustrating the electrical configuration of a power supply device and a wireless power transfer apparatus.
Fig. 2 is a flowchart showing a charging control process executed by a supply-side controller.
Fig. 3 is a graph representing the relationship between the set power value and the output power value.

### MODES FOR CARRYING OUT THE INVENTION

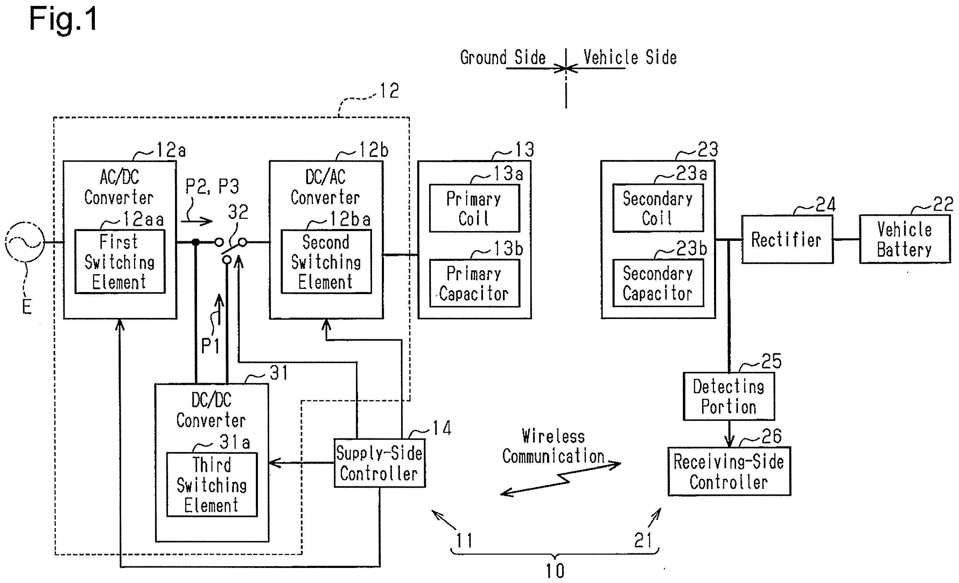

A power supply device and a wireless power transfer apparatus according to one embodiment of the present invention will now be described with reference to Figs. 1 to 3.

As shown in Fig. 1, a wireless power transfer apparatus 10 includes a power supply device 11 and a power receiving device 21, which are capable of wirelessly transferring power. The power supply device 11 is a primary device provided on the ground. The power receiving device 21 is a secondary device mounted on a vehicle.

The power supply device 11 includes an AC power source 12, which is capable of outputting AC power of a predetermined frequency, a power supply unit 13, which receives AC power from the AC power source 12, and a supply-side controller 14. The AC power source 12 is, for example, a voltage supply. Grid-connected power, which is external power, is supplied to the AC power source 12 from a grid-connected power source E, which is an infrastructure. The AC power source 12 converts the grid-connected power into AC power and outputs the converted AC power.

The AC power source 12 includes an AC/DC converter 12a, which is a first converting portion, a DC/AC converter 12b, which is a DC/AC converting portion, a DC/DC converter 31, which is a second converting portion, and a switching relay 32, which is a switching portion. The AC/DC converter 12a receives the grid-connected power from the grid-connected power source E and outputs DC power. The DC/AC converter 12b converts the received DC power into AC power and outputs the converted AC power.

The AC/DC converter 12a is, for example, a boost converter. When receiving grid-connected power of 200V, the AC/DC converter 12a outputs DC power of a predetermined second DC power value P2 of several kilowatts (hereinafter, referred to as a second DC power). The AC/DC converter 12a has a first switching element 12aa. The AC/DC converter 12a periodically turns on and off the first switching element 12aa with the pulse width of a predetermined duty cycle. This causes the AC/DC converter 12a to output the second DC power. The voltage value of the second DC power is, for example, several hundreds of volts. As the AC/DC converter 12a, an AC/DC converter is employed that has a rated power greater than the second DC power value P2 by a predetermined margin.

The AC/DC converter 12a is configured to change the power value of DC power by varying the ON/OFF duty cycle of the first switching element 12aa and output the DC power. The AC/DC converter 12a is configured to output DC power of a power value in the range from Pmin to Pmax. In this case, the second DC power value P2 is a value between the minimum power value Pmin and the maximum power value Pmax. The rated power of the AC/DC converter 12a is the maximum power value Pmax.

The DC/AC converter 12b has a second switching element 12ba. The DC/AC converter 12b periodically turns on and off the second switching element 12ba to convert DC power to AC power.

The power receiving device 21 includes a vehicle battery 22, a power receiving unit 23, a rectifier 24 (an AC/DC converting portion), a detecting portion 25, and a receiving-side controller 26. The AC power output from the AC power source 12 is wirelessly transferred to the power receiving device 21 and is used to charge the vehicle battery 22, which is an electricity storage device. The wireless power transfer apparatus 10 includes the power supply unit 13 and the power receiving unit 23 and is configured to transfer power between the power supply device 11 and the power receiving device 21.

The power supply unit 13 has the same configuration as the power receiving unit 23. The power supply unit 13 is configured to produce magnetic field resonance with the power receiving unit 23. The power supply unit 13 is formed by a resonance circuit including a primary coil 13a and a primary capacitor 13b, which are connected in parallel. The power receiving unit 23 includes a resonance circuit, which is formed by a secondary coil 23a and a secondary capacitor 23b, which are connected in parallel.
The resonance frequency of the resonance circuit of the power supply unit 13 is the same as the resonance frequency of the resonance circuit of the power receiving unit 23.

With this configuration, when the power supply unit 13 and the power receiving unit 23 are at relative positions that allow for magnetic field resonance, and AC power is input to primary coil 13a of the power supply unit 13, the power supply unit 13 produces magnetic field resonance with the secondary coil 23a of the power receiving unit 23. As a result, the power receiving unit 23 receives some of the energy from the power supply unit 13 and receives AC power from the power supply unit 13.

The frequency of the AC power output from the AC power source 12, that is, the switching frequency of the second switching element 12ba, is set to a value corresponding to the resonance frequency of the power supply unit 13 and the power receiving unit 23, so that power transfer is possible between the power supply unit 13 and the power receiving unit 23. For example, the frequency of the AC power is set to be equal to the resonance frequency of the power supply unit 13 and the power receiving unit 23. As long as remaining in a range in which power transfer is possible, the frequency of the AC power may be different from the resonance frequency of the power supply unit 13 and the power receiving unit 23.

The rectifier 24 rectifies the AC power received by the power receiving unit 23. The DC power rectified by the rectifier 24 is delivered to the vehicle battery 22 to charge the vehicle battery 22. The vehicle battery 22 is constituted by battery cells, which are connected in series.

The detecting portion 25 detects the AC power received by the power receiving unit 23 and delivers the detection result to the receiving-side controller 26. The power receiving device 21 has an SOC sensor (not shown). The SOC sensor detects the state of charge (SOC) of the vehicle battery 22 and delivers the detection result to the receiving-side controller 26.

The supply-side controller 14 performs various types of control on the power supply device 11. Specifically, the supply-side controller 14 performs various types of control on the AC/DC converter 12a, the DC/AC converter 12b, and the like. For example, the supply-side controller 14 instructs the AC/DC converter 12a to turn on and off output of DC power and designate a set power value. When the set power value is designated, the AC/DC converter 12a adjusts the ON/OFF duty cycle of the first switching element 12aa such that DC power of the set power value is output. The supply-side controller 14 corresponds to a control section.

The supply-side controller 14 and the receiving-side controller 26 are configured to wirelessly communicate with each other. The supply-side controller 14 and the receiving-side controller 26 start or end power transfer by exchanging information.

The DC/DC converter 31 converts the DC power output from the AC/DC converter 12a into first DC power, the power value of which is smaller than that of the second DC power. The DC/DC converter 31 is a buck converter and includes a third switching element 31 a. The input terminal of the DC/DC converter 31 is connected to the output terminal of the AC/DC converter 12a. The DC/DC converter 31 receives DC power output from the AC/DC converter 12a. When receiving, from the AC/DC converter 12a, DC power of a predetermined power value (for example, the minimum power value Pmin), the DC/DC converter 31 periodically turns on and off the third switching element 31 a to convert the received DC power into a first DC power, the power value of which is smaller than that of the received DC power. The DC/DC converter 31 then outputs the converted first DC power. The power value of the first DC power is a first DC power value P1, which is smaller than the minimum power value Pmin, which can be output from the AC/DC converter 12a.

The DC/AC converter 12b is configured to receive power from the AC/DC converter 12a or the DC/DC converter 31. The switching relay 32 switches the source of power for the DC/AC converter 12b between the AC/DC converter 12a and the DC/DC converter 31. The source of power for the DC/AC converter 12b corresponds to a component to which the input terminal of the DC/AC converter 12b is connected.

When the AC/DC converter 12a is connected to the DC/AC converter 12b, the DC/AC converter 12b receives the second DC power. In this case, the AC power obtained through conversion of the second DC power (hereinafter, referred to as second AC power) is output from the DC/AC converter 12b. In contrast, when the DC/DC converter 31 is connected to the DC/AC converter 12b, the DC/AC converter 12b receives the first DC power. In this case, the AC power obtained through conversion of the first DC power (hereinafter, referred to as first AC power) is output from the DC/AC converter 12b. The first AC power has a smaller power value than the second AC power.

The power value of the DC power output from the DC/DC converter 31 is determined by the ON/OFF duty cycle of the third switching element 31a. Thus, the DC/DC converter 31 is configured to change and output the power value by changing the ON/OFF duty cycle of the third switching element 31a. Specifically, when the DC/DC converter 31 is receiving DC power of the minimum power value Pmin, the range of the power value that can be output from the DC/DC converter 31 is wider than the range from zero to the minimum power value Pmin (zero excluded). That is, the AC power source 12 is configured to output DC power in the range from zero to the maximum power value Pmax (zero excluded) to the DC/AC converter 12b by selecting one of the AC/DC converter 12a and the DC/DC converter 31. The first DC power value P1 is included in the range of the power value that can be output from the DC/DC converter 31.

When a set power value in the range of the power value that can be output from the supply-side controller 14 is designated, the DC/DC converter 31 operates to output DC power of the set power value.

When a predetermined condition for initiating a charging sequence is met, the supply-side controller 14 executes a charging control process for charging the vehicle battery 22, while wirelessly communicating with the receiving-side controller 26. The charging control process will now be described. The charging sequence triggering condition may be any condition. For example, the charging sequence triggering condition may be met when a request from the receiving-side controller 26 is received or when a vehicle is detected by a predetermined sensor.

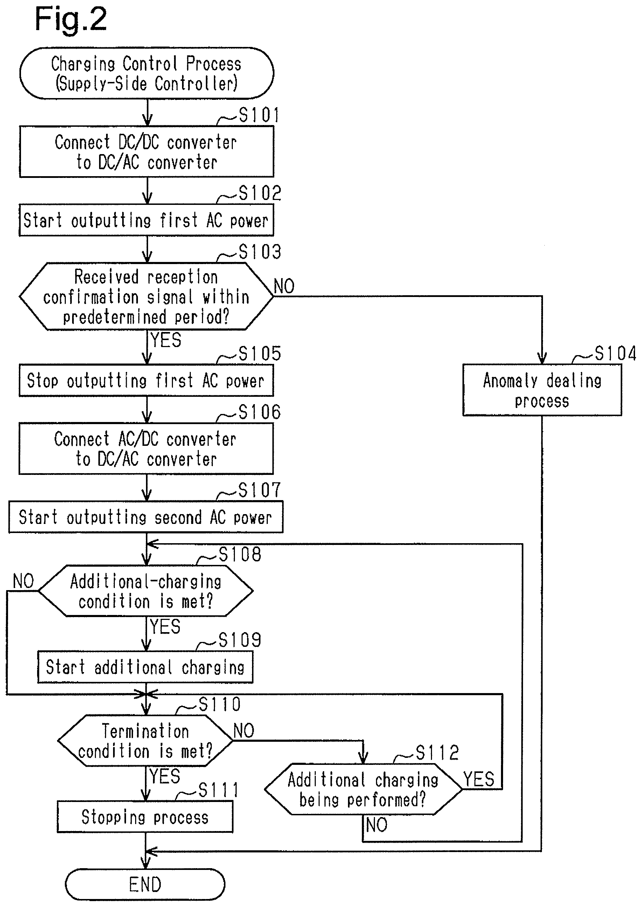

As shown in Fig. 2, first, at step S101, the supply-side controller 14 controls the switching relay 32 to connect the DC/DC converter 31 to the DC/AC converter 12b. Next, at step S102, the supply-side controller 14 controls the AC/DC converter 12a, the DC/DC converter 31, and the DC/AC converter 12b such that the DC/AC converter 12b outputs the first AC power. Specifically, the supply-side controller 14 commands the AC/DC converter 12a to output DC power of the minimum power value Pmin and commands the DC/DC converter 31 to convert the DC power of the minimum power value Pmin into the first DC power. Then, the supply-side controller 14 commands the DC/AC converter 12b to convert the first DC power into the first AC power.

Also, the supply-side controller 14 notifies the receiving-side controller 26 that the first AC power is being output. When receiving the notification, the receiving-side controller 26 determines whether the power receiving unit 23 has received AC power the power value of which is greater than a predetermined threshold value based on the detection result of the detecting portion 25. When receiving the AC power, the receiving-side controller 26 delivers a reception confirmation signal to the supply-side controller 14. The threshold power value may be any value other than zero. For example, the threshold power value may be a value obtained by multiplying the power value of the first AC power by a threshold transfer efficiency.

In the subsequent step S103, the supply-side controller 14 determines whether it has received the reception confirmation signal from the receiving-side controller 26 within a predetermined period. When receiving no reception confirmation signal within the predetermined period, the supply-side controller 14 determines that there is an anomaly in the power transfer between the power supply unit 13 of the power supply device 11 and the power receiving unit 23 of the power receiving device 21. Then at step S104, the supply-side controller 14 executes an anomaly dealing process and ends the ongoing charging control process. In the anomaly dealing process, for example, the output of the first AC power is stopped, and the occurrence of an error is announced.

When receiving a reception confirmation signal within the predetermined period, the supply-side controller 14 proceeds to step S105 and stops output of the first AC power. To stop output of the first AC power, for example, the DC/AC converter 12b may be controlled to stop periodic turning on and off of the second switching element 12ba. Alternatively, the connection of the switching relay 32 may be made floating.

Thereafter, at step S106, the supply-side controller 14 controls the switching relay 32 such that the AC/DC converter 12a is connected to the DC/AC converter 12b. Next, at step S107, the supply-side controller 14 controls the AC/DC converter 12a and the DC/AC converter 12b such that the DC/AC converter 12b outputs the second AC power. Accordingly, the second AC power is transferred to the power receiving unit 23 from the power supply unit 13. The second AC power is then rectified by the rectifier 24 and delivered to the vehicle battery 22. The vehicle battery 22 is thus charged. The charging of the vehicle battery 22 by using the second AC power is referred to as normal charging.

Thereafter, at step S108, the supply-side controller 14 determines whether an additional-charging condition, which triggers additional charging, is met. The additional-charging condition, for example, refers to a condition in which the state of charge of the vehicle battery 22 is a predetermined additional-charging triggering condition. The additional charging refers to charging of the vehicle battery 22 by using third AC power, the power value of which is greater than that of the first AC power and smaller than that of the second AC power.

Step S108 may be performed in any suitable manner, and the following is one example. During charging of the vehicle battery 22, the receiving-side controller 26 periodically obtains the state of charge of the vehicle battery 22 based on the detection result of the SOC sensor. When the state of charge of the vehicle battery 22 becomes the additional-charging triggering condition, the receiving-side controller 26 delivers an additional charging instruction signal to the supply-side controller 14. When receiving the instruction signal, the supply-side controller 14 determines that the additional-charging condition is met.

When the additional-charging condition is not met, the supply-side controller 14 proceeds to step S110. In contrast, when the additional-charging condition is met, the supply-side controller 14 starts the additional charging at step S109 and then proceeds to step S110. Specifically, at step S109, the supply-side controller 14 controls the AC/DC converter 12a to output DC power of a third DC power value P3, which is greater than the first DC power value P1 and smaller than the second DC power value P2 (hereinafter, referred to as third DC power). The third DC power value P3 is greater than the minimum power value Pmin. Then, the supply-side controller 14 controls the DC/AC converter 12b to convert the third DC power into the third AC power. The additional charging is thus started.

At step S110, the supply-side controller 14 determines whether a charging termination condition for the vehicle battery 22 is met. The termination condition, for example, refers to a state in which the state of charge of the vehicle battery 22 has become a termination initiating state or in which an anomaly has occurred.

When the termination condition is met, the supply-side controller 14 executes a process for stopping output of the AC power at step S111 and ends the ongoing charging control process. In contrast, when the termination condition is not met, the supply-side controller 14 proceeds to step S112 and determines whether the additional charging is being carried out. If the additional charging is being carried out, the supply-side controller 14 returns to step S110. In contrast, if the additional charging is not being carried out, that is, if normal charging is being carried out, the supply-side controller 14 returns to step S108.

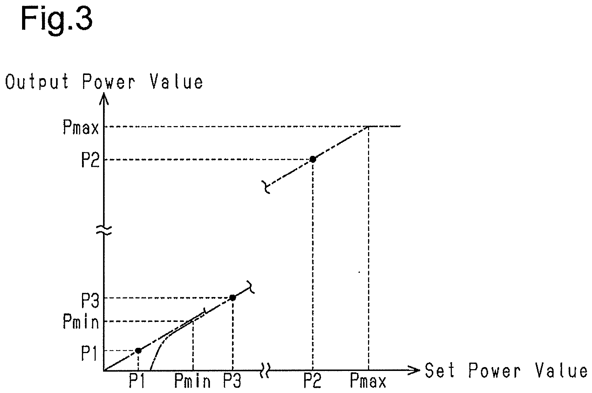

Operation of the present embodiment will now be described with reference to Fig. 3. Fig. 3 is a graph representing the relationship of an output power value with respect to a set power value in the AC/DC converter 12a and the DC/DC converter 31. In other words, Fig. 3 shows the power values of the DC power that is actually output from the AC/DC converter 12a and the DC/DC converter 31 when the AC/DC converter 12a and the DC/DC converter 31 operate to output DC power of the set power value to the DC/AC converter 12b. In Fig. 3, the long dashed short dashed line and the long dashed double-short dashed line are separate from each other. However, the long dashed short dashed line and the long dashed double-short dashed line partly overlap with each other in reality.

As indicated by the long dashed double-short dashed line in Fig. 3, the AC/DC converter 12a is capable of outputting DC power in the range from Pmin to Pmax. Thus, in the range of the set power value from Pmin to Pmax, the AC/DC converter 12a outputs DC power the power value of which is equal to the set power value. The second DC power value P2 and the third DC power value P3 are values between the minimum power value Pmin and the maximum power value Pmax. Thus, the second DC power and the third DC power are output respectively by using the AC/DC converter 12a.

However, if the set power value falls below the minimum power value Pmin, the pulse width of the first switching element 12aa of the AC/DC converter 12a can no longer be controlled. Also, the influences of the rise time and the fall time of the first switching element 12aa can no longer be ignored. Thus, as indicated by the long dashed double-short dashed line in Fig. 3, the AC/DC converter 12a cannot output DC power the power value of which is equal to the set power value.

In contrast, as indicated by the long dashed short dashed line in Fig. 3, the DC/DC converter 31 outputs DC power the power value of which is equal to the set power value in the range of the set power value from zero to Pmin (zero excluded).
The first DC power value P1 is in the range from 0 to Pmin. Thus, by using the DC/DC converter 31, the DC/AC converter 12b is allowed to output first DC power the power value of which is as low as the level that cannot be output from the AC/DC converter 12a.

The present embodiment, which has been described, has the following advantages.
(1) The power supply device 11 includes the DC/AC converter 12b. The DC/AC converter 12b converts DC power to AC power, and outputs the converted AC power to the primary coil 13a of the power supply unit 13. The power supply device 11 includes the AC/DC converter 12a and the DC/DC converter 31. The AC/DC converter 12a and the DC/DC converter 31 both output DC power to the DC/AC converter 12b. The AC/DC converter 12a converts grid-connected power to DC power. The DC/DC converter 31 converts the DC power output from the AC/DC converter 12a into the first DC power, the power value of which is smaller than that of the received DC power. The power supply device 11 further includes the switching relay 32, which switches the source of power for the DC/AC converter 12b between the AC/DC converter 12a and the DC/DC converter 31. The first DC power value P1, which is the power value of the first DC power, is set to be smaller than the second DC power value P2, which is the power value of the second DC power output from the AC/DC converter 12a when the source of power for the DC/AC converter 12b is the AC/DC converter 12a. When receiving the second DC power from the AC/DC converter 12a, the DC/AC converter 12b outputs the second AC power. In contrast, when receiving the first DC power from the DC/DC converter 31, the DC/AC converter 12b outputs the first AC power, the power value of which is smaller than that of the second AC power. Accordingly, the DC/AC converter 12b of the AC power source 12 is allowed to output both the first AC power and the second AC power, which have different power values.
(2) The power receiving device 21 is mounted on a vehicle. The AC power received by the power receiving unit 23 is used to charge the vehicle battery 22. Generally, the capacity of the vehicle battery 22 is significantly greater than the capacity of batteries for mobile phones or the like. To charge the vehicle battery 22 of such a large capacity in a short time, the AC power source 12 needs to output AC power of a relatively great power value. Thus, a converter having a relatively great rated power is employed as the AC/DC converter 12a. However, the thus selected AC/DC converter 12a cannot output DC power of a small power value. In this regard, the DC/DC converter 31 is used in the present embodiment, so that the DC/AC converter 12b receives the first DC power, the power value of which is smaller than the minimum power value Pmin that can be output from the AC/DC converter 12a. This configuration eliminates the above drawbacks.
(3) When the source of power for the DC/AC converter 12b is the DC/DC converter 31, the supply-side controller 14 determines whether power transfer from the power supply unit 13 to the power receiving unit 23 is being performed, specifically, whether the power receiving unit 23 is receiving AC power (step S104). When determining that power transfer from the power supply unit 13 to the power receiving unit 23 is being performed, the supply-side controller 14 controls the switching relay 32 to switch the source of power for the DC/AC converter 12b from the DC/DC converter 31 to the AC/DC converter 12a. Since the transfer determination is performed by using the first AC power of a relatively small power value, the power loss at the transfer determination is reduced. When the result of the transfer determination is positive, the source of power for the DC/AC converter 12b is switched to the AC/DC converter 12a. Thus, the second AC power of a relatively great power value can be delivered from the power supply device 11 to the power receiving device 21.
   Particularly, when the transfer determination is performed by using the second AC power, the power value of which is relatively great, the transfer efficiency can be excessively low depending on the positional relationship between the coils 13a and 23a. This may significantly increase the power value of the reflected wave power, so that the load on the AC power source 12 is increased. In contrast, in the present embodiment, the first AC power is used to perform the transfer determination, so that no excessive load acts on the AC power source 12 even if the transfer efficiency is significantly low.
(4) The AC/DC converter 12a is a boost converter. The boost AC/DC converter 12a is smaller than a buck-boost converter. The AC/DC converter 12a thus can be reduced in size. Since the AC/DC converter 12a is a boost converter, the minimum power value Pmin that can be output from the AC/DC converter 12a tends to be great. Thus, although the boost AC/DC converter 12a is used, the power value required for the transfer determination (the first DC power value P1) may not be obtained. In this regard, the present embodiment employs the DC/DC converter 31 to achieve the power value required for the transfer determination.
(5) When the source of power for the DC/AC converter 12b is the DC/DC converter 31, the AC/DC converter 12a outputs DC power of a power value smaller than the second DC power value P2, that is, DC power of the minimum power value Pmin. Then, the DC/DC converter 31 converts the DC power of the minimum power value Pmin into the first DC power and outputs it to the DC/AC converter 12b. This configuration reduces the step-down ratio of the DC/DC converter 31, and thus reduces the size of the DC/DC converter 31.

The above illustrated embodiment may be modified as follows.

In the above-illustrated embodiment, the AC/DC converter 12a outputs three types of power values: the second DC power value P2, the third DC power value P3, and the minimum power value Pmin. However, the AC/DC converter 12a may output DC power of any power value within the range from Pmin to Pmax. Likewise, not limited to the first DC power value P1, the DC/DC converter 31 may output DC power of any power value in the range from 0 to Pmin.

The output power value of the AC/DC converter 12a when the source of power for the DC/AC converter 12b is the DC/DC converter 31 is not limited the minimum power value Pmin, but may be any value. For example, when the output power value is smaller than the second DC power value P2, the step-down ratio of the DC/DC converter 31 can be made smaller than that in the case in which the output power value is the second DC power value P2. Also, the output power value may be greater than or equal to the second DC power value P2. That is, if the output power value of the AC/DC converter 12a can be changed, the output power value of the AC/DC converter 12a may be any value in the range from Pmin to Pmax when the source of power for the DC/AC converter 12b is the DC/DC converter 31. The step-down ratio of the DC/DC converter 31 only needs to be set to a value that converts the DC power of the predetermined value into the first DC power.

The transfer determination performed by the supply-side controller 14 prior to the normal charging may be omitted.

The power value of the AC power used in the transfer determination may be the same as the power value of the AC power used in the additional charging.

The supply-side controller 14 may use the DC/DC converter 31 both in the additional charging and the transfer determination.

The use of the first AC power is not limited to the transfer determination, but may be used for any suitable purpose.

The additional charging may be omitted.

The AC/DC converter 12a may be a buck-boost converter. To reduce the size of the AC power source 12, a boost converter is preferable.

In the above-illustrated embodiment, the AC/DC converter 12a is configured to change the power value of the output DC power. However, the AC/DC converter 12a may be configured to change only the second DC power.

The external power is not limited to grid-connected power, but may be any type of power. For example, the external power may be DC power. In this case, the AC/DC converter 12a is preferably replaced by a DC/DC converter that converts a power value. In this modification, the DC/DC converter corresponds to the first converting portion. That is, the first converting portion is not limited to a device that converts AC power into DC power, but may be a device that converts the power value of DC power. In other words, the first converting portion may include any suitable device that converts external power into DC power of a predetermined power value.

A cooling portion such as a fan may be provided to cool the AC/DC converter 12a and the DC/AC converter 12b.

The power supply device 11 may include a primary impedance converter between the DC/AC converter 12b and the power supply unit 13. Likewise, the power receiving device 21 may include a secondary impedance converter between the power receiving unit 23 and the rectifier 24 and a DC/DC converter between the rectifier 24 and the vehicle battery 22.

The detecting portion 25 may detect DC power that has been rectified by the rectifier 24.

The specific configuration of the AC/DC converter 12a and the DC/AC converter 12b may be changed. That is, the number of each of switching elements 12aa, 12ba may be one or plural.

For example, the DC/AC converter 12b may include a bridge circuit having four second switching elements 12ba. In this case, the DC/AC converter 12b preferably outputs the second AC power in the full-bridge mode, in which all of the four second switching elements 12ba are turned on and off, and outputs the first AC power in the half-bridge mode, in which two of the four second switching elements 12ba are alternately turned on and off. This allows the first AC power to be effectively output.

The concrete contents of the transfer determination may be changed. For example, when receiving a notification that the first AC power is being output, the receiving-side controller 26 may transmit a reception failure signal if the power receiving unit 23 is not receiving AC power. When receiving the reception failure signal, the supply-side controller 14 may execute the anomaly dealing process without waiting for a predetermined period.

The performer of the charging control process is not limited to the supply-side controller 14. For example, the receiving-side controller 26 may perform the charging control process. In this case, the supply-side controller 14 preferably delivers information necessary for the charging control process to the receiving-side controller 26. Also, the receiving-side controller 26 preferably sends various instructions to the supply-side controller 14 as necessary, and the supply-side controller 14 preferably controls the AC/DC converter 12a, the DC/AC converter 12b, the DC/DC converter 31, and the like in accordance with the instructions.

When the output power value of the AC/DC converter 12a is close to the minimum power value Pmin, the output voltage waveform and the output current waveform from the AC/DC converter 12a are likely to be distorted. To avoid such disadvantage, the DC/DC converter 31 may be used to output AC of a power value close to the minimum power value Pmin.

The AC power source 12 is not limited to a voltage source, but may be a power source or a current source.

The resonance frequency of the power supply unit 13 may be different from that of the power receiving unit 23 as long as power transfer is possible between the power supply unit 13 and the power receiving unit 23.

The power supply unit 13 may have a different configuration from the power receiving unit 23.

The capacitors 13b, 23b may be omitted. In this case, magnetic field resonance may be produced using the parasitic capacitance of the coils 13a, 23a.

The power receiving device 21 may be mounted on a robot, an electric wheelchair, and the like.

The primary coil 13a and the primary capacitor 13b may be connected in series. Likewise, the secondary coil 23a and the secondary capacitor 23b may be connected in series.

In place of magnetic field resonance, electromagnetic induction may be used to achieve wireless power transfer.

The AC power received by the power receiving unit 23 may be used for purposes other than charging of the vehicle battery 22.

The power supply unit 13 may include a resonance circuit that is constituted by the primary coil 13a and the primary capacitor 13b and a primary coupling coil that is joined to the resonance circuit by electromagnetic induction. Likewise, the power receiving unit 23 may include a resonance circuit that is constituted by the secondary coil 23a and the secondary capacitor 23b and a secondary coupling coil that is joined to the resonance circuit by electromagnetic induction.

## Claims

1. A power supply device comprising:
an AC power source including
a first converting portion, which receives power from outside and outputs DC power, and
a DC/AC converting portion, wherein, when receiving DC power ,the DC/AC converting portion converts the DC power into AC power of a predetermined frequency and outputs the AC power; and
a primary coil, which receives the AC power, wherein
the power supply device is capable of wirelessly transferring the AC power to a secondary coil of a power receiving device and further comprises:
a second converting portion, which receives the DC power output from the first converting portion and is capable of converting the DC power into first DC power of a power value that is smaller than a power value of the DC power; and
a switching portion, which switches a source of power for the DC/AC converting portion between the first converting portion and the second converting portion, wherein
the power value of the first DC power is smaller than a power value of a second DC power, which is output from the first converting portion when the source of power for the DC/AC converting portion is the first converting portion,
when receiving the second DC power from the first converting portion, the DC/AC converting portion outputs second AC power as the AC power, and
when receiving the first DC power from the second converting portion, the DC/AC converting portion outputs, as the AC power, first AC power of a power value that is smaller than that of the second AC power.

2. The power supply device according to claim 1, wherein
when the source of power for the DC/AC converting portion is the second converting portion, transfer determination is performed, in which it is determined whether power is being transferred from the primary coil to the secondary coil, and
when it is determined in the transfer determination that power is being transferred from the primary coil to the secondary coil, the switching portion switches the source of power for the DC/AC converting portion from the second converting portion to the first converting portion.

3. The power supply device according to claim 1 or 2, wherein
the first converting portion is configured to change the power value of the DC power and then output the DC power, and
the power value of the first DC power is smaller than a minimum power value that can be output from the first converting portion.

4. The power supply device according to claim 3, wherein, when the source of power for the DC/AC converting portion is the second converting portion,
the first converting portion outputs, to the second converting portion, DC power of a predetermined value of a power value that is smaller than that of the second DC power, and
the second converting portion converts the DC power of the predetermined value into the first DC power.

5. A wireless power transfer apparatus comprising:
an AC power source including
a first converting portion, which receives power from outside and outputs DC power, and
a DC/AC converting portion, wherein, when receiving DC power ,the DC/AC converting portion converts the DC power into AC power of a predetermined frequency and outputs the AC power;
a primary coil, which receives the AC power;
a secondary coil, which is capable of wirelessly receiving the AC power received by the primary coil;
a second converting portion, which receives the DC power output from the first converting portion and is capable of converting the DC power into first DC power of a power value that is smaller than a power value of the DC power; and
a switching portion, which switches a source of power for the DC/AC converting portion between the first converting portion and the second converting portion, wherein
the power value of the first DC power is smaller than a power value of a second DC power, which is output from the first converting portion when the source of power for the DC/AC converting portion is the first converting portion,
when receiving the second DC power from the first converting portion, the DC/AC converting portion outputs second AC power as the AC power, and
when receiving the first DC power from the second converting portion, the DC/AC converting portion outputs, as the AC power, first AC power of a power value that is smaller than that of the second AC power.
